# EUROPÄISCHE PATENTSCHRIFT

(11) **EP 1 002 983 B1**
(45) Veröffentlichungstag und Bekanntmachung des Hinweises auf die Patenterteilung: **27.02.2002**
(21) Anmeldenummer: 99122448.6
(22) Anmeldetag: 11.11.1999
(51) Int. Cl.: F16L 55/045, E03C 1/04

(54) **Druckschlag- und Geräuschdämpfer für Wasserarmaturen**
Water hammer and noise attenuator for water pipes and taps
Réducteur de bruits et de coups de bélier pour conduites d'eau et robinets

(30) Priorität: 21.11.1998 DE 19853769
(43) Veröffentlichungstag der Anmeldung: 24.05.2000
(73) Patentinhaber: Frey, Conrad, 8008 Zürich (CH)
(72) Erfinder:
(74) Vertreter: Wolff, Michael, Dipl.-Phys.

(56) Entgegenhaltungen:
- FR-A- 1 087 326
- FR-A- 1 536 384
- GB-A- 817 874
- PATENT ABSTRACTS OF JAPAN vol. 1996, no. 05, 31. Mai 1996 (1996-05-31) & JP 08 021587 A (INAX CORP), 23. Januar 1996 (1996-01-23)
- PATENT ABSTRACTS OF JAPAN vol. 1996, no. 04, 30. April 1996 (1996-04-30) & JP 07 317985 A (INAX CORP), 8. Dezember 1995 (1995-12-08)

## Beschreibung

Die Erfindung betrifft einen Druckschlag- und Geräuschdämpfer für sanitäre Anlagen.

Bei einem derartigen, aus der DE-PS 689.184 bekannten "geräuschdämpfenden Rohrzwischenstück" ist ein Gummirohrstück (2) als Schlauchstück mittels einer koaxialen Metallhülse (5) als Gehäuse axial und radial eingefasst, wobei der mittlere Abschnitt des Gummirohrstückes (2) radial außen einen Luftraum mit der Metallhülse (5) bilden kann.

Dieser Dämpfer ist nur für Wasserleitungen, nicht aber für Wasserarmaturen geeignet.
Der Erfindung liegt daher die Aufgabe zugrunde, einen gleichartigen Dämpfer zu schaffen, der speziell für Wasserarmaturen bestimmt ist und sowohl den beim schnellen Beenden des Wasserdurchflusses entstehenden Druckschlag als auch die beim Wasserfluss auftretenden Kavitations- und Fließgeräusche erheblich vermindert.
Diese Aufgabe ist erfindungsgemäß durch die sanitäze Wasserarmatur gemäß Anspruch 1 gelöst.

Bevorzugte Ausführungsformen der erfindungsgemäßen Wasserarmatur sind in den Unteransprüchen charakterisiert:
Bei der Armatur gemäß Anspruch 2 schont die Druckminderung das Dämpfungselement.
Bei der Armatur gemäß Anspruch 3 wirkt die vorgesehene öffnung als Belüftungsloch, damit der Kolben ohne Pumpwirkung nach dem vorübergehenden Komprimieren des Elastomers von diesem zurückgestellt werden kann.

Bei der Armatur gemäß Anspruch 4 sorgen der Ringspalt und seine Öffnungen dafür, dass sich beim Lecken einer Kolbendichtung zwischen dem Elastomer und dessen Gehäuse kein Gegendruck entwickeln kann, der die Dämpfung zumindest verschlechtert.

Es ist zwar aus der JP-A-08/021.587 bekannt gewesen, eine Wasserleitung (2) mit einer abzweigenden Sackleitung (5) zu versehen und mit dieser einen Druckschlag-Dämpfer mit einem Elastomer (13) als Dämpfungselement zu verbinden, das von einem starren Gehäuse (6, 9) umgeben ist, das einseitig offen und dort nach Verschrauben seiner Teile 6, 12) mittels eines Kolbens (7) mit O-Ring wasserdicht geschlossen ist, welcher das Elastomer (13) beaufschlagt und dazu dem Wasserdruck ausgesetzt ist. Diese Dämpfungseinrichtung (5, 7, 9, 13), die für eine sanitäre Armatur weder bestimmt noch geeignet ist, weist jedoch keinen das Gehäuse (6, 9) aufnehmenden Hohlraum mit Wasserfüllung auf, deren Wasserdruck der Kolben (7) ausgesetzt ist, denn ein Endteil (6) des Gehäuses (6, 9) ist zugleich Endabschnitt (6) der Sackleitung (5). Im Folgenden ist die Erfindung anhand der durch die Zeichnung beispielhaft dargestellten beiden Ausführungsformen der erfindungsgemäßen Armatur im Einzelnen erläutert.

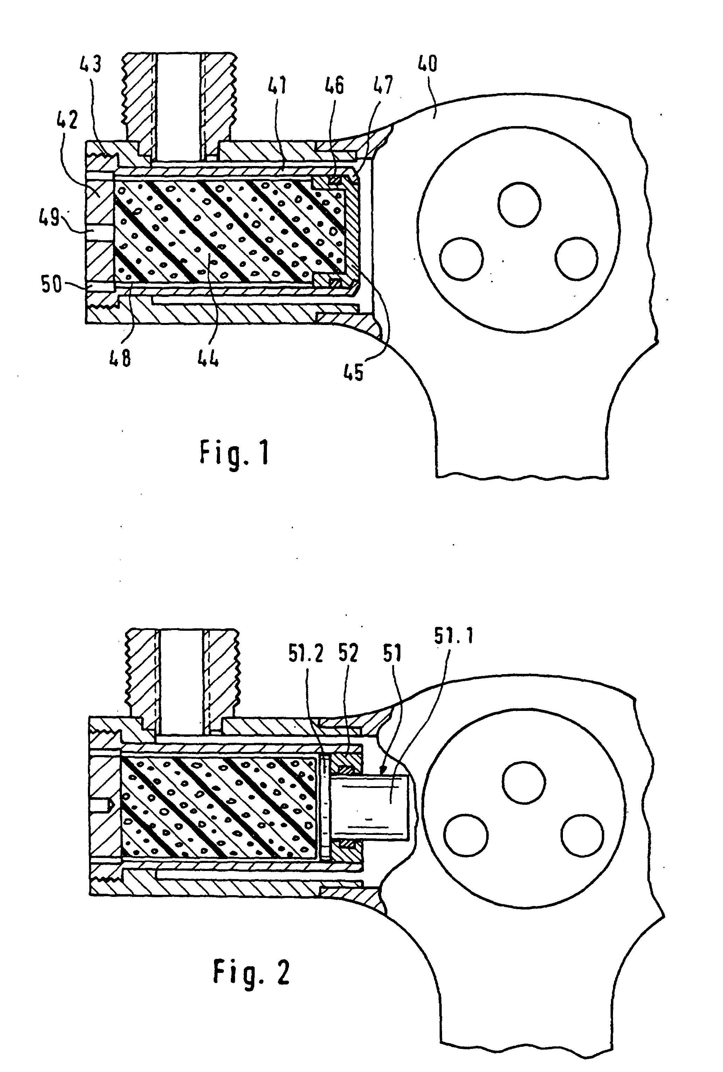

Es zeigen Fig. 1 und 2 je einen Längsschnitt durch die erste bzw. zweite Ausführungsform der Wasserarmatur.

In beiden Ausführungsbeispielen ist in einer Sanitärarmatur 40 ein Hohlraum ausgebildet, der wassergefüllt ist, soweit das Wasser nicht durch einen patronenartigen Einsatz verdrängt ist, der aus einem zylindrischen Gehäuse 41 und einem eingelagerten zylindrischen Elastomer 44 mit geringerem Durchmesser besteht, so daß beide einen Ringspalt 48 bilden.
An seiner axialen Außenseite ist das Gehäuse 41 mittels einer gelochten Scheibe 42 geschlossen, die im Zentrum eine öffnung 49 als Belüftungsloch und am Rand mehrere auf ihren Umfang verteilte öffnungen 50 aufweist, die fluid-leitend mit dem Ringspalt 48 in Verbindung. stehen. Die Scheibe 42 ist mittels eines Gewindes 43 in eine öffnung des Hohlraumes der Sanitärarmatur 40 geschraubt.
An seiner axialen Innenseite greift in das Gehäuse 41 ein Kolben 45 bzw. 51 ein, der bei der ersten Ausführungsform gemäß Fig. 1 Topfform hat und das innere Ende des Elastomers 44 sowie an seiner radialen Außenseite einen gegen das Gehäuse 41 abdichtenden O-Ring 46 aufnimmt, wobei das benachbarte Gehäuseende einen Bördelrand 47 aufweist, der verhindert, daß der Kolben 45 das Gehäuse 41 verlässt.

Der Kolben 51 der zweiten Ausführungsform ist ein Differential-Kolben, der einstückig aus einem zylindrischen Stempel 51.1 und einer zylindrischen Scheibe 51.2 besteht, die vom Gehäuse 41 geführt ist und an einem kreisringförmigen Gehäuseeinsatz 52 anschlägt, der an seiner radialen Innenseite einen gegen den Stempel 51.1 abdichtenden O-Ring 46 aufnimmt.
Die kleinere, axial innere Stempel-Stirnfläche des Kolbens 51 ist im Hohlraum der Sanitärarmatur 40 dem Wasserdruck ausgesetzt, während die größere, axial äußere ScheibenStirnfläche des Kolbens 51 das Elastomer 44 beaufschlagt.
Der Wasserdruck, insbesondere dessen Spitzen, gelangt also reduziert auf das Dämpfungselement (44), das z.B. aus mehreren gleichen Elastomerscheiben bestehen kann.

## Patentansprüche

1. Sanitäre Wasserarmatur (40) mit einem Hohlraum, in den das einseitig offene und dort mittels eines Kolbens (45; 51) wasserdicht geschlossene starre Gehäuse (41) eines Druckschlag- und Geräusch-Dämpfers eingesetzt ist, der ein von dem Gehäuse (41) umgebenes,ggf. geschlossenporiges, Elastomer (44) als Dämpfungselement aufweist, welches der Kolben (45; 51) beaufschlagt, der dazu dem Wasserdruck im Hohlraum ausgesetzt ist.

2. Armatur mit Dämpfer nach Anspruch 1, **dadurch gekennzeichnet, dass** der Kolben als Differential-Kolben (51) eine das Elastomer (44) beaufschlagende größere wirksame Fläche (an 51.2) und eine dem Wasserdruck ausgesetzte kleinere wirksame Fläche (an 51.1) aufweist, so dass die Wasserkraft auf den Differentialkolben (51) unter Druckminderung auf das Elastomer (44) übertragbar ist.

3. Armatur mit Dämpfer nach Anspruch 1 oder 2, **dadurch gekennzeichnet, dass** das Gehäuse (41) auf seiner dem Kolben (45; 51) gegenüberliegenden Seite mindestens eine Öffnung (49 und 50) aufweist.

4. Armatur mit Dämpfer nach Anspruch 3, **dadurch gekennzeichnet, dass** das Elastomer (44) und sein Gehäuse (41) zylindrisch sind und gemeinsam einen Ringspalt (48) bilden, der sich vom Kolben (45; 51) über die zylinderaxiale Länge des Gehäuses (41) erstreckt, dessen mindestens eine Öffnung (49 und 50) in fluidleitender Verbindung mit dem Ringspalt (48) steht.

## Claims

1. Sanitary water tap (40) with a cavity, in which the rigid housing (41), which is open at one end and water-tightly closed there by means of a piston (45; 51), of a hammer and noise damper is inserted, the damper having an optionally closed-pore elastomer (44), which is surrounded by the housing (41), as a damping element, which loads the piston (45; 51), which for that purpose is exposed to the water pressure in the cavity.

2. Tap with damper according to claim 1, **characterised in that** the piston as a differential pressure piston (51) has a greater effective area (at 51.2) loading the elastomer (44) and a smaller effective area (at 51.1) exposed to the water pressure; so that the water force on the differential piston (51) is transmissible to the elastomer (44) with diminution of pressure.

3. Tap with damper according to claim 1 or 2, **characterised in that** the housing (41) on its side opposite the piston. (45; 51) has at least one opening (49 and 50).

4. Tap with damper according to claim 3, **characterised in that** the elastomer (44) and its housing (41) are cylindrical and form in common an annular gap (48) which extends from the piston (45; 51) over the cylinder axial length of the housing (41), the at least one opening (49 and 50) of which stands in fluid-conducting connection with the annular gap (48).

## Revendications

1. Robinet (40) sanitaire à eau, comprenant une cavité dans laquelle est inséré le boîtier (41) rigide, ouvert d'un côté, en y étant fermé d'une manière étanche à l'eau au moyen d'un piston (45, 51), d'un réducteur de coups de bélier et de bruits, qui comporte comme élément réducteur un élastomère (44) entouré du boîtier (41) et, le cas échéant, à pores fermés, élastomère que le piston (45, 51) sollicite en étant à cet effet soumis à la pression de l'eau dans la cavité.

2. Robinet à réducteur suivant la revendication 1, **caractérisé en ce que** le piston a, en tant que piston (51) différentiel, une surface (en 51.2) efficace plus grande sollicitant l'élastomère (44) et une surface (en 51.1) efficace plus petite soumise à la pression de l'eau, de sorte que la force de l'eau peut être transmise au piston (51) différentiel en diminuant la pression sur l'élastomère (44).

3. Robinet à réducteur suivant la revendication 1 ou 2, **caractérisé en ce que** le boîtier (41) a au moins une ouverture (49 et 50) sur sa face opposée au piston (45, 51).

4. Robinet à réducteur suivant la revendication 3, **caractérisé en ce que** l'élastomère (44) et son boîtier (41) sont cylindriques et forment conjointement une fente (48) annulaire, qui s'étend du piston (45, 51) sur la longueur axiale cylindrique du boîtier (41), au moins une ouverture (49 et 50) du boîtier communiquant du point de vue des fluides avec la fente (48) annulaire.
